# EUROPÄISCHE PATENTANMELDUNG

(11) **EP 4 627 978 A1**
(43) Veröffentlichungstag der Anmeldung: **08.10.2025**
(21) Anmeldenummer: 25162259.3
(22) Anmeldetag: 07.03.2025
(51) Int. Cl.: A47J 31/46, A47J 31/52

(54) **VERFAHREN UND VORRICHTUNG ZUM ÜBERWACHEN EINER AUSGABE EINER FLÜSSIGKEIT UND GETRÄNKEAUTOMAT**

(30) Priorität: 03.04.2024 DE 102024109294
(71) Anmelder: Miele & Cie. KG, 33332 Gütersloh (DE)
(72) Erfinder: Janson, Thomas, 33332 Gütersloh (DE)

(57) **Zusammenfassung**

Die Erfindung betrifft ein Verfahren (500) zum Überwachen einer Ausgabe einer Flüssigkeit, die als ein Strahl (225) über eine Düse (110) eines Auslaufs eines Getränkeautomaten (100) in ein Gefäß (112) ausgegeben wird. Dazu wird ein Bild erfasst, welches den Strahl (225) abbildet. Eine Position eines der Düse (110) abgewandten Endes des Strahls (225) wird unter Verwendung des Bilds bestimmt und eine Füllhöhe der Flüssigkeit in dem Gefäß (112) wird unter Verwendung der Endposition des Strahls (225) ermittelt.

## Beschreibung

Verfahren und Vorrichtung zum Überwachen einer Ausgabe einer Flüssigkeit und Getränkeautomat

Die Erfindung betrifft ein Verfahren zum Überwachen einer Ausgabe einer Flüssigkeit, eine Vorrichtung zum Überwachen einer Ausgabe einer Flüssigkeit und einen Getränkeautomaten.

Die DE 10 2016 107 086 A1 beschreibt eine Volumen- und Überlauferkennung für einen Getränkeautomaten.

Der hier vorgestellte Ansatz stellt sich die Aufgabe, ein verbessertes Verfahren zum Überwachen einer Ausgabe einer Flüssigkeit, eine verbesserte Vorrichtung zum Überwachen einer Ausgabe einer Flüssigkeit und einen verbesserten Getränkeautomaten zu schaffen.

Erfindungsgemäß wird diese Aufgabe durch ein Verfahren zum Überwachen einer Ausgabe einer Flüssigkeit, eine Vorrichtung zum Überwachen einer Ausgabe einer Flüssigkeit und einem Getränkeautomaten mit den Merkmalen der Hauptansprüche gelöst. Vorteilhafte Ausgestaltungen und Weiterbildungen der Erfindung ergeben sich aus den nachfolgenden Unteransprüchen.

Die mit der Erfindung erreichbaren Vorteile bestehen in einem sicheren Erkennen der Füllhöhe in einem Gefäß, welches unter einem Auslauf platziert ist, wodurch verhindert werden kann, dass das Gefäß überfüllt wird.

Ein Verfahren zum Überwachen einer Ausgabe einer Flüssigkeit, die als ein Strahl über eine Düse eines Auslaufs eines Getränkeautomaten in ein Gefäß ausgegeben wird, umfasst die folgenden Schritte:
Erfassen eines Bilds welches den Strahl abbildet;
Bestimmen einer der Düse abgewandten Endposition des Strahls unter Verwendung des Bilds; und
Ermitteln einer Füllhöhe der Flüssigkeit in dem Gefäß unter Verwendung der Endposition des Strahls.

Die Flüssigkeit kann gemäß einer Ausführungsform eine flüssige Substanz wie Wasser oder Kaffee sein. Der Getränkeautomat kann beispielsweise als eine Kaffeemaschine, insbesondere als ein Kaffeevollautomat ausgeformt sein. Das Bild kann unter Verwendung einer geeigneten Bilderaufnahmeeinrichtung, beispielsweise einer Kamera, erfasst werden.

Ein Abbild des Strahls kann in dem Bild unter Verwendung einer geeigneten Bildauswertung erkannt werden. Dabei kann auf bekannte Methoden zurückgegriffen werden. Die Füllhöhe kann lediglich beispielsweise aus einer Länge des Strahls, aus einer Differenz zwischen der Endposition und einer bekannten Position der Düse oder aus einer Differenz zeitlich nacheinander ermittelter Füllhöhen ermittelt werden. Beispielsweise kann die Endposition des Strahls zunächst in Bildkoordinaten als ein Ende des Abbilds des Strahls in dem Bild bestimmt werden und anschließend in Weltkoordinaten, beispielsweise eines an dem Getränkeautomaten verankerten Koordinatensystems überführt werden. Ebenso kann beispielsweise eine Gesamtlänge des Strahls zunächst in Bildkoordinaten bestimmt und anschließend in Weltkoordinaten überführt werden. Gemäß einer Ausführungsform kann das Ende des Strahls bestimmt werden, ohne dass die Oberfläche des sich innerhalb des Gefäßes bereits befindlichen Getränks, auch als Fülloberfläche bezeichnet, separat erkannt wird, beispielsweise unter Verwendung einer speziellen Bildauswertung zum Erkennen der Oberfläche. Somit kann es ausreichend sein, eine dem Strahl zuordenbare Linie mittels einer geeigneten Bildauswertung in dem Bild zu erkennen und ein Ende der Linie als das Ende des Strahls zu verwenden.

Im Schritt des Bestimmens, kann eine Strahllänge des Strahls anhand eines Abstands zwischen der Endposition des Strahls und einer Düsenposition bestimmt werden, und im Schritt des Ermittelns kann die Füllhöhe als Differenz zwischen einer Düsenhöhe und der Strahllänge ermittelt werden. Die Endposition des Strahls, kann gemäß einer Ausführungsform als ein Schnittpunkt mit der Fülloberfläche definiert sein. Gemäß einer Ausführungsform können bekannte Algorithmen zur Linienerkennung, wie etwa der Hough-Transformation, verwendet werden, um die Länge des Strahls im Bild bestimmen. Dazu kann aus der Linienlänge im Bild die reale Strahllänge in Zentimetern ausgerechnet werden. Beispielsweise kann eine entsprechende Formel eingesetzt werden, um aus der Kamerahöhe, der Brennweite der Kamera, einem konstruktiven waagerechtem Abstand zwischen Kamera und Düse in Millimetern sowie einem Abstand im Bild zwischen dem Strahlende und dem orthogonalen Punkt im Kamerabild in Pixeln die Füllhöhe zu berechnen. Gemäß einer Ausführungsform ergibt die Strahllänge den Abstand zwischen Düse und Aufprallfläche wie der Getränkeoberfläche. Wird von der Auslaufhöhe bzw. der Höhenlage der Auslassdüse die Strahllänge abgezogen, ergibt sich die Füllhöhe.

Das Verfahren kann einen Schritt des Entzerrens des Bilds umfassen, um ein entzerrtes Bild zu erhalten. Im Schritt des Bestimmens kann die Endposition des Strahls unter Verwendung des entzerrten Bilds bestimmt werden. Dadurch kann beispielsweise die Strahllänge genauer bestimmt werden. Dies ermöglicht den Einsatz des oben beispielhaft gezeigten Hough-Linien Filters, denn in den entzerrten, bevorzugt orthonormalen, Bildern sind Linien gerade, die im verzerrten Bild sonst krumm wären.

Das Verfahren kann außerdem einen Schritt des Erkennens des Strahls in dem Bild unter Verwendung eines vorbestimmten Suchkorridors, innerhalb des Bilds, aufweisen. Durch eine Breite des Korridors können Ungenauigkeiten bei den Düsenpositionen, der Kamera-Ausrichtung oder der Geradlinigkeit des Strahls ausgeglichen werden. Die klare Eingrenzung auf einen Korridor führt zu mehr Robustheit. Die Laufzeit der Strahlerkennung ist in der Komplexität linear und schnell. Aufgrund einer optional bekannten Düsenhöhe und einem Strahlverlauf muss nur ein Teil des Bildes mit dem Korridor ausgewertet werden. Im Vergleich zur linearen Laufzeit beim Strahl ist die Erkennung einer kreisrunden Fülloberfläche hingegen kubisch, mit drei Dimensionen und entsprechend aufwendiger.

Zusätzlich oder alternativ kann der Strahl in dem Bild unter Verwendung eines Bewegungsfilters erkannt werden. Somit kann die Bewegung im Strahl als besondere Charakteristik genutzt werden, um ihn vom Hintergrund zu trennen und robuster zu erfassen. Da der Strahl eine hohe Flussgeschwindigkeit aufweist, kann er durch Bewegungsfilter vom statischen Hintergrund getrennt werden.

Im Schritt des Ermittelns kann die Füllhöhe unter Verwendung der Endposition des Strahls, einem Abstand zwischen der Bildaufnahmeeinrichtung und der Düse und der Düsenhöhe ermittelt werden. Mit diesen Eingangsgrößen und bekannten geometrischen Zusammenhängen kann die Füllhöhe einfach ermittelt werden.

Die Füllhöhe kann mit einem Schwellenwert verglichen werden und in einem Schritt des Stoppens kann eine Ausgabe des Strahls abhängig von einem Ergebnis des Vergleichens gestoppt werden. Gemäß einer Ausführungsform beträgt der Schwellwert kleiner oder gleich 70% der Gefäßhöhe. Gemäß einer alternativen Ausführungsform kann der Schwelwert auch kleiner oder gleich 80% der Gefäßhöhe, oder kleiner oder gleich 90% der Gefäßhöhe betragen. Ein Befüllen des Gefäßes wird gestoppt, falls ein Überlauf droht, hierzu wird beispielsweise die Gefäßhöhe mit der Einfüllhöhe verglichen.

Im Schritt des Erfassens kann ein Bild erfasst werden, welches einen zweiten Strahl abbildet. Hierbei können die beiden Strahlen in der Realität parallel sein und in dem gleichen Abstand wie der Abstand der beiden Düsen zueinander verlaufen. Im Schritt des Bestimmens kann eine Position eines einer zweiten Düse abgewandten Ende des zweiten Strahls unter Verwendung des Bilds bestimmt werden, und im Schritt des Ermittelns kann eine zweite Füllhöhe der Flüssigkeit in dem Gefäß oder einem zweiten Gefäß unter Verwendung der Endposition des zweiten Strahls ermittelt werden. Gemäß einer Ausführungsform kann durch einen Vergleich beider Strahlen die Präzision verbessert werden.

Die Schritte des Erfassens, Bestimmens und Ermittelns können wiederholt ausgeführt werden, um einen zeitlichen Verlauf der Einfüllhöhe zu ermitteln. In und einem Schritt des

Ermittelns kann eine Gefäßform des Gefäßes unter Verwendung des zeitlichen Verlaufs der Einfüllhöhe und einem zeitlichen Verlauf eines unter Verwendung des Strahls eingefüllten Volumens ermittelt werden. Das Volumen mittels des Strahls ausgegebenen Flüssigkeit kann beispielsweise mittels eines Durchflusssensors erfasst oder aus einem Betrieb einer Pumpe zum Fördern der Flüssigkeit zu der Düse bestimmt werden. Die Auswertung der Strahllänge ist Position- und Gefäßform unabhängig und somit sehr robust, da Fehler einer alternativ durchführbaren direkten Gefäßerkennung sich nicht in der Füllstanderkennung niederschlagen. Die Auswertung des Verlaufs der Einfüllhöhe ist im Vergleich zu einer alternativen Auswertung der Fülloberfläche wenig aufwendig, da sich nicht zu berücksichtigen ist, dass sich die Fülloberfläche aufgrund der Tassenform ausbreitet.

Eine entsprechende Vorrichtung zum Überwachen einer Ausgabe einer Flüssigkeit kann dazu ausgebildet sein, um die Schritte des Verfahrens in entsprechenden Einheiten auszuführen und, oder anzusteuern. Auch durch diese Ausführungsvariante der Erfindung in Form einer Vorrichtung kann die der Erfindung zugrunde liegende Aufgabe schnell und effizient gelöst werden.

Die Vorrichtung kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Vorrichtung einlesbares Sensorsignal darstellen. Ein Ausgangssignal kann ein Steuersignal oder ein Datensignal darstellen, das an einer Ausgangsschnittstelle der Vorrichtung bereitgestellt werden kann. Die Vorrichtung kann ausgebildet sein, um die Ausgangssignale unter Verwendung einer in Hardware oder Software umgesetzten Verarbeitungsvorschrift zu bestimmen. Beispielsweise kann die Vorrichtung dazu eine Logikschaltung, einen integrierten Schaltkreis oder ein Softwaremodul umfassen und beispielsweise als ein diskretes Bauelement realisiert sein oder von einem diskreten Bauelement umfasst sein.

Ein Getränkeautomat, insbesondere ein Kaffeevollautomaten, kann mindestens einen Auslauf aufweisen, welcher wiederum mindestens eine Düse, zum Ausgeben eines Strahls einer Flüssigkeit in ein Gefäß umfasst. Ferner kann der Getränkeautomat eine Ausführungsform der Vorrichtung zum Überwachen einer Ausgabe einer Flüssigkeit umfassen.

Die Vorrichtung kann eine Bildaufnahmeeinrichtung umfassen, die ausgebildet ist, um das Bild zu erfassen, welches den Strahl abbildet. Ferner kann die Vorrichtung eine Auswerteeinrichtung umfassen, die ausgebildet ist, um unter Verwendung des Bilds die Position eines der Düse abgewandten Endes des Strahls zu bestimmen, und unter Verwendung der Position des der Düse abgewandten Ende des Strahls die Füllhöhe der Flüssigkeit in dem Gefäß zu ermitteln. Gemäß einer Ausführungsform kann dies als eine kamerabasierte Füllhöhenerkennung im Kaffeevollautomaten bezeichnet werden.

Die Bildaufnahmeeinrichtung kann auf einer Höhe mit den Düsen angeordnet sein. Dadurch kann die Bildaufnahmeeinrichtung möglichst viel von dem Strahl aufnehmen. Wenn der der Strahl bis zur Düse sichtbar ist, so ist auch eine Füllung bis zur Düsenspitze mit großen Gefäßen möglich. Zudem kann die Höhe der Bildaufnahmeeinrichtung mit einer Ausgangshöhe des Strahls gleichgesetzt werden. Dies erleichtert die Ermittlung der Füllhöhe.

Auch wenn der beschriebene Ansatz anhand eines Haushaltgeräts beschrieben wird, kann der hier beschriebene Ansatz entsprechend im Zusammenhang mit einem gewerblichen oder professionellen Gerät, beispielsweise einem medizinischen Gerät, wie einem Reinigungs- oder Desinfektionsgerät, einem Kleinsterilisator, einem Großraumdesinfektor oder einer Container-Waschanlage eingesetzt werden.

Ein Ausführungsbeispiel der Erfindung ist in den Zeichnungen rein schematisch dargestellt und wird nachfolgend näher beschrieben. Es zeigt
- Figur 1: eine schematische Darstellung eines Ausführungsbeispiels eines Getränkeautomaten;
- Figur 2: eine schematische Darstellung eines Ausführungsbeispiels eines Ausgabebereichs eines Getränkeautomaten;
- Figur 3: eine schematische Darstellung eines Ausführungsbeispiels eines Bilds einer Bildaufnahmeeinrichtung;
- Figur 4: eine Darstellung eines Ausführungsbeispiels eines Bilds einer Bildaufnahmeeinrichtung; und
- Figur 5: ein Ausführungsbeispiel eines Ablaufdiagramms eines Verfahrens zum Überwachen einer Ausgabe einer Flüssigkeit.

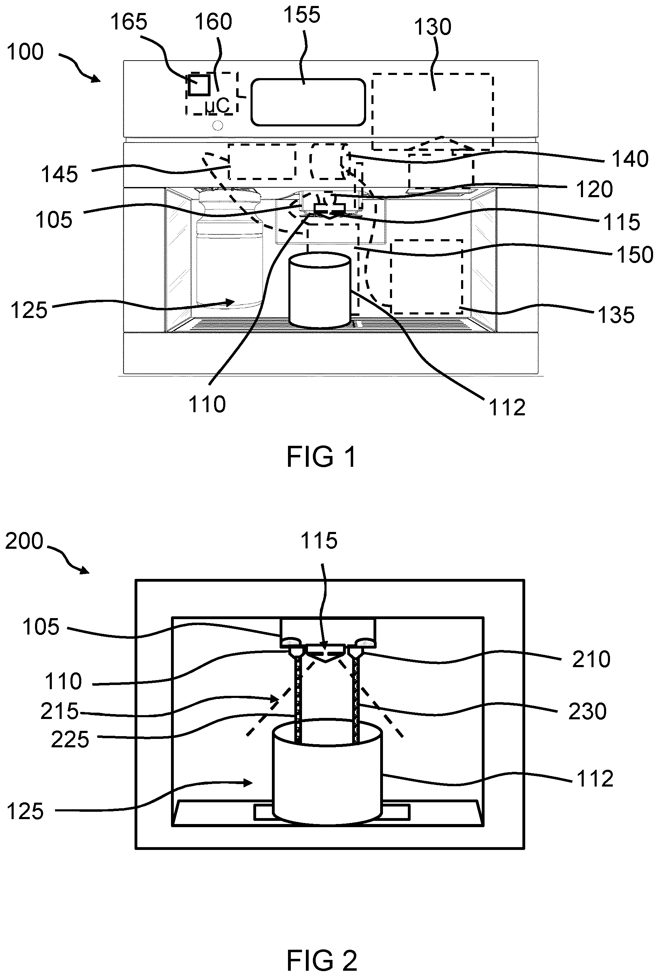

Figur 1 zeigt eine schematische Darstellung eines Ausführungsbeispiels eines Getränkeautomaten 100, beispielhaft in Form eines Kaffeevollautomaten. Gemäß bekannter Kaffeevollautomaten weist der Getränkeautomat 100 eine Ausgabe 105 mit mindestens einer Düse 110 zum Ausgeben eines Getränkes in ein Gefäß 112 auf.

Der Auslass 105 ist optional fahrbar ausgeformt. Gemäß einem Ausführungsbeispiel kann ein Nutzer den Auslass in der Höhe verstellen.

An dem Auslass 105 ist eine Bildaufnahmeeinrichtung 115 angeordnet. Die Bildaufnahmeeinrichtung 115 ist ausgebildet um Bilder von einem Bereich unterhalb des Auslasses 105 aufnehmen. Optional weist der Getränkeautomat 100 eine Beleuchtungseinrichtung 120 auf, die ausgebildet ist, um einen Aufnahmebereich der Bildaufnahmeeinrichtung 115 zu beleuchten.

Der Getränkeautomaten 100 ist ausgebildet, um eine Füllhöhe des ausgegebenen Getränks in dem Gefäß durch eine geeignete Auswertung zumindest eines von der Bildaufnahmeeinrichtung 115 erfassten Bildes zu ermitteln. Dazu wird ein von dem Bild abgebildeter Strahl zum Ausgeben des Getränks in dem Bild erkannt. Unter Verwendung eines von dem Bild abgebildeten Ende des Strahls wird die Füllhöhe ermittelt.

Gemäß einem Ausführungsbeispiel umfasst die Bildaufnahmeeinrichtung 115 eine Kamera oder ist als eine Kamera ausgeformt. Die Beleuchtungseinrichtung 120 kann gemäß einem Ausführungsbeispiel eine geeignete Lichtquelle, beispielsweise eine LED-Leuchte, umfassen.

Der Getränkeautomat 100 ist gemäß einem Ausführungsbeispiel in einem Ausgabebereich 125 mit der Bildaufnahmeeinrichtung 115 und der Beleuchtungseinrichtung 120 ausgestattet um die Getränkeausgabe zu überwachen und ein mögliches Überlaufen von Gefäßen zu vermeiden. Dabei ist die Bildaufnahmeeinrichtung 115 so installiert, dass sie den Gefäßinhalt und einen Flüssigkeitsstrahl erfassen kann.

Um ein Getränk, gemäß diesem Ausführungsbeispiel Kaffee, zuzubereiten und aus dem Auslass 105 auslassen zu können, weist der Getränkeautomat 100 optional einen Bohnenbehälter 130 und einen Wassertank 135 auf. Aus dem Wassertank 135 wird das Wasser mit Hilfe einer Pumpe 140 zu durch Heizblock 145 zum Erhitzen des Wassers und zu einer Brüheinheit 150 geleitet. Die Brüheinheit 150 ermöglicht eine Zubereitung des Kaffees. Anschließend wird das Getränk, hier der zubereitete Kaffee über die Düse 110 des Auslaufs 105 ausgegeben.

Eine optionale Bedienanzeige 155 ermöglicht es dem Nutzer verschiedene Konfigurationen bezüglich des Getränks zu betätigen, und einen Vorgang des Zubereitens des Getränks anzuzeigen. Um die Bedienanzeige 155 und weitere Einrichtungen des Getränkeautomaten 100 zu steuern, weist der Getränkeautomat 100 eine Steuereinheit 160 auf.

In die Steuereinheit 160 ist optional eine Auswerteeinrichtung 165 integriert, welche gemäß einem Ausführungsbeispiel Signale auswertet, welche die Bildaufnahmeeinrichtung 115 liefert.

Figur 2 zeigt ein Ausführungsbeispiel eines Ausgabebereichs 200 eines Getränkeautomaten, wie er beispielsweise anhand von Figur 1 beschriebenen ist. Der Auslass 105 weist hier neben der Düse 110 eine zweite Düse 210 auf. Gemäß dem gezeigte Ausführungsbeispiel werden die erste Düse 110 und die zweite Düse 210 gemeinsam zum Befüllen des Gefäßes 112 verwendet. Alternativ können die Düsen 110, 210 verwendet werden, um zwei Gefäße gleichzeitig mit einem Getränk zu füllen.

Beispielhaft ist die Bildaufnahmeeinrichtung 115 mittig zwischen den Düsen 110, 210 angeordnet. In der Figur 2 wird ein Sichtbereich 215 der Bildaufnahmeeinrichtung 115 dargestellt. Der Sichtbereich 215 umfasst den Ausgabebereich 125 unterhalb des Auslasses 105. Der Ausgabebereich 125 ist gemäß einem Ausführungsbeispiel dazu ausgeformt, um Gefäße, wie beispielsweise Tassen, aufnehmen zu können.

Unter Verwendung der ersten Düse 110 wird ein erster Strahl 225 und unter Verwendung der zweiten Düse 210 wird ein zweiter Strahl 230 an Flüssigkeit in das Gefäß 112 abgegeben. Die zwei Strahlen 225, 230 an Flüssigkeit, welche aus der Düse 110 und der zweiten Düse 210 kommen, liegen innerhalb des Sichtbereichs 215 der Bildaufnahmeeinrichtung 115. Die zwei Strahlen 225, 230 fließen gemäß dieses Ausführungsbeispiels in das Gefäß 112, welches ebenfalls innerhalb des Sichtbereichs 215 liegt. Gemäß einem alternativen Ausführungsbeispiel kann der Sichtbereich 215 bis zu zwei Gefäße erfassen, welche dann jeweils von einem der Strahlen 225, 230 befüllt werden.

Ein unter Verwendung der Bildaufnahmeeinrichtung 115 aufgenommenes Bild bildet die Strahlen 225, 230 vollständig oder teilweise ab. Zumindest ein den Düsen 110, 210 abgewandtes Ende der Strahlen 225, 230 wird in dem Bild abgebildet und kann zum Ermitteln der Füllhöhe des Getränks innerhalb des Gefäßes 112 verwendet werden.

Wenn nur eine einzige Düse 110 vorhanden oder verwendet wird, bildet das von der Bildaufnahmeeinrichtung 115 aufgenommene Bild nur einen einzigen Strahl 225 ab, der jedoch auf entsprechende Weise zum Ermitteln der Füllhöhe des Getränks innerhalb des Gefäßes 112 verwendet werden kann.

Gemäß einem Ausführungsbeispiel wird mit nur einer Kamera, hier der Bildaufnahmeeinrichtung 115, und optional einer vorhandenen Auslaufbeleuchtung der Strahl 225 der Auslaufdüse 110 erfasst und bewertet. Bei zwei Auslaufdüsen, hier den Düsen 110, 210 werden die zwei parallelen Strahlen 225, 230 mit bekanntem Abstand, also dem Düsenabstand, erfasst. Dazu wird ein Bild oder mehrere Bilder optional mit Auslaufbeleuchtung aufgenommen. Durch eine Berechnung mit bekannten Größen, wie der Abstand der Düsen 110, 210, der Abstand der Bildaufnahmeeinrichtung 115 zu den Düsen 110, 210 und der Position der Düsen 110, 210 in dem Auslass hinsichtlich der Höhe, kann die Füllhöhe sowie eine Befüllgeschwindigkeit berechnet werden. Gemäß einem Ausführungsbeispiel sind diese Berechnungen sehr einfach, weil nur lineare Vektoren betrachtet werden können, und keine komplizierte Bilderfassung erforderlich ist. Auch die Bilderfassung und Auswertung ist einfach, weil der Strahl 225 aus der Düse 110 eine klare Kontur aufweist und immer gegenüber der Umgebung erkennbar ist.

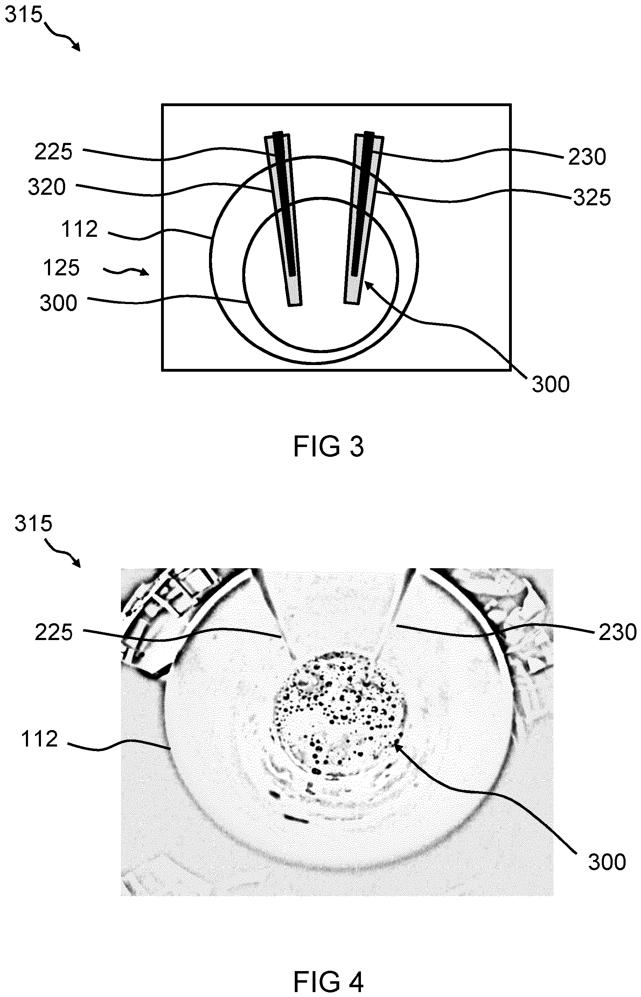

Figur 3 zeigt eine schematische Darstellung eines Ausführungsbeispiels eines unter Verwendung einer Bildaufnahmeeinrichtung, wie sie beispielsweise anhand der vorangegangenen Figuren beschrieben ist, erfassten Bilds 315. Entsprechend dem anhand von Figur 2 beschriebenen Sichtbereichs der Bildaufnahmeeinrichtung bildet das Bild 315 das Gefäß 112 in dem Ausgabebereich aus einer Vogelperspektive ab.

In dem Bild 315 sind die zwei in das Gefäß 112 fließenden Strahlen 225, 230 abgebildet, welche auf eine Getränkeoberfläche 300 eines sich bereits innerhalb des Gefäßes 112 befindlichen Getränks treffen. Die Getränkeoberfläche 300 stellt eine aktuelle Füllhöhe des Getränks dar. Somit entspricht ein Ende der Strahlen 225, 230 innerhalb des Gefäßes 112 der Füllhöhe. Durch eine geeignete Bildauswertung des Bilds 315 wird ein Abbild zumindest einer der Strahlen 225, 230 innerhalb des Bildes 315 und ein sich innerhalb des Gefäßes 112 befindliches Ende dieses Strahls 225, 230 bestimmt. Aus der Position des Endes kann die Füllhöhe des Getränks innerhalb des Gefäßes 112 ermittelt werden.

Die Füllhöhe oder ein Verlauf der Füllhöhe über die Zeit wird optional für eine Überlauferkennung verwendet. Bei der Überlauferkennung ist die relevante Information nicht die Füllhöhe selbst, sondern dass sich die Füllhöhe durch ein Befüllen des Gefäßes 112 ändert. Anhand der Gerätegeometrie ist der genaue Verlauf der Strahlen 225, 230 beim Befüllen bekannt und kann mit der Bildaufnahmeeinrichtung abgetastet werden. Hierdurch reduziert sich die Bildverarbeitung genau auf diesen in der Regel geradlinigen Strahl, beispielsweise auf den ersten Strahl 225.

Die Füllhöhe ist geometrisch aus der Strahllänge der Strahlen 225, 230 ablesbar, wozu keine Information über die Form des Gefäßes 112 notwendig ist und die Füllhöhe muss auch nicht aus anderen Größen, wie der Größe und Position der Getränkeoberfläche 300 abgelesen werden. Abmaße der Oberfläche selbst sind häufig schwer zu erkennen da die Oberfläche besonders bei Milchschaum nicht glatt ist. Gegebenenfalls kann die Oberfläche auch am Innenrand des Gefäßes 112 reflektieren und wird teils doppelt gesehen, weswegen ein Bestimmen der Füllhöhe über die Strahllänge von Vorteil ist. Außerdem muss bei einer Abmessung der Oberfläche die Größe des Gefäßes 112 bekannt sein, um genau zu sein, wobei sich Ungenauigkeiten beim Gefäß 112 auf Ungenauigkeiten in der Füllhöhe niederschlagen.

Die Füllhöhe wird gemäß einem Ausführungsbeispiel durch eine Düsenhöhe, von der die Strahllänge abgezogen wird, berechnet. Dies ist allerdings nicht der Fall, wenn das Gefäß 112 nicht mittig unter dem Auslauf angeordnet ist, und die Strahlen 225, 230 nicht auf den Gefäßboden, sondern auf die Gefäßwand treffen.

Gegebenenfalls steht die Füllhöhe nicht direkt vom Gefäßboden zur Verfügung falls die Tasse nicht mittig steht und zumindest einer der Strahlen 225, 230 zunächst auf die Gefäßwand trifft oder in der Perspektive der Bildaufnahmeeinrichtung durch die Gefäßwand verdeckt ist. Sie ist jedoch verfügbar, sobald der Eintauchpunkt eines der beiden Strahlen 225, 230 in der Fülloberfläche im Kamerabild auftaucht.

Um die Strahlen 225, 230 in dem Bild 315 einfach zu detektieren können Suchkorridore 320, 325 verwendet werden, die auch nur als Korridore bezeichnet werden können, und die einen erwarteten Verlauf der Strahlen 225, 230 in dem Bild 315 anzeigen. Somit ist eine Auswertung des Bilds 315 innerhalb der Suchkorridore 320, 235 oder zumindest innerhalb eines der Suchkorridore 320, 325 ausreichend. Die Suchkorridore 320, 325 reichen gemäß einem Ausführungsbeispiel bis zu der Tiefe des Gefäßbodens, also beispielsweise einem Tassenboden.

Die Strahlen 225, 230 müssen nicht von den Düsen an sichtbar sein und nur ein Schnittpunkt 305 mit der Fülloberfläche 300 ist hier wichtig. Je mehr jedoch von den Strahlen 225, 230 sichtbar ist, so genauer und robuster können sie mit ihrer Ausrichtung in Korridoren 320, 325 erfasst werden und der Schnittpunkt 305 mit der Getränkeoberfläche bestimmt werden.

Die Korridore 320, 235 sind gemäß einem Ausführungsbeispiel jeweils ein rechteckiger Bereich in einem Erwartungsbereich der Strahlen 225, 230. Die Korridore 320, 325 sind dazu ausgebildet, eine Erkennung der Strahlen 225, 230 zu vereinfachen und einen Bereich der Bildanalyse einzuschränken. Der Bereich kann auch trapezförmig sein.

Durch bekannte Abstände und Ausrichtung der Bildaufnahmeeinrichtung und der Düsen können die Strahlen 225, 230 durch die optionalen Korridore 320, 325 im Bild eingegrenzt werden. Aus der Kameraperspektive entfernen sich die Strahlen 225, 230 von den Düsen in Richtung des Gefäßes 112 und werden so kleiner, so dass die Korridore 320, 325 unten im Bild schmaler als oben sind. Durch die Breite der Korridore 320, 325 können Ungenauigkeiten bei den Düsenpositionen, der Kamera-Ausrichtung oder der Geradlinigkeit der Strahlen 225, 230 ausgeglichen werden.

Da die Strahlen 225, 230 eine hohe Flussgeschwindigkeit aufweist, können diese gemäß einem alternativen Ausführungsbeispiel, zusätzlich durch Bewegungsfilter vom statischen Hintergrund getrennt werden.

Für das eine Gefäß 112 wird gemäß einem Ausführungsbeispiel durch ein Vergleichen beider Strahlen 225, 230 die Präzision verbessert, mit der die Füllhöhe bestimmt wird. Für zwei Gefäße mündet jeweils einer der Strahlen 225, 230 in ein Gefäß und den beiden Strahlen 225, 230 sind zwei individuellen Füllhöhen zuzuordnen.

Figur 4 zeigt eine Darstellung eines Ausführungsbeispiels eines Bilds 315 der Bildaufnahmeeinrichtung, wie sie anhand der vorangegangenen Figuren beschrieben ist. Das Bild 315 der Bildaufnahmeeinrichtung ist vor einer optionalen Entzerrung dargestellt. Auch hier sind die Strahlen 225, 230 vom Auslauf in das Gefäß 112 sichtbar. Zudem ist die Getränkeoberfläche 300 und die in die Getränkeoberfläche 300 mündenden Enden der Strahlen 225, 230 erkennbar.

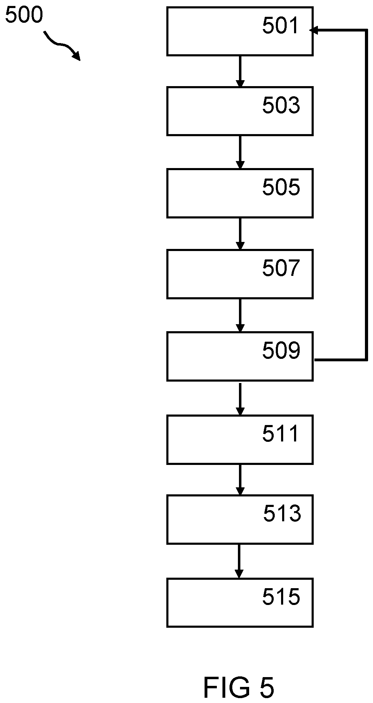

Figur 5 zeigt ein Ausführungsbeispiel eines Ablaufdiagramms eines Verfahrens 500 zum Überwachen einer Getränkeausgabe einer Flüssigkeit aus dem Getränkeautomaten in ein Gefäß. Dazu wird zumindest ein unter Verwendung einer Bildaufnahmeeinrichtung erfasstes Bild verwendet, wie es anhand der vorangegangenen Figuren beschrieben ist.

Unter Verwendung der Bildaufnahmeeinrichtung wird in einem Schritt 501 des Erfassens das Bild erfasst. Dabei bildet das Bild mindestens einen Strahl ab, welcher aus den Düsen des Auslasses kommt.

Ansprechend auf den Schritt des Erfassens 501 wird optional ein Schritt des Entzerrens 503 des Bilds ausgeführt, um ein entzerrtes Bild zu erhalten. Gemäß einem Ausführungsbeispiel wird das Bild so entzerrt, dass die Strahlen eine gerade Form aufweisen. Beispielsweise wird das Kamerabild also so entzerrt, dass im orthonormalen Raum Linien gerade sind. Durch Schwerkraft ist der Auslassstrahl ausreichend gerade.

In einem Schritt 505 wird der abgebildete Strahl erkannt, oder es werden gegebenenfalls mehrere in dem Bild abgebildete Strahlen erkannt. Optional wird im Schritt 505 zumindest ein vorbestimmter Suchkorridor verwendet, innerhalb dessen in dem Bild nach dem zumindest einen Strahl gesucht wird. Zusätzlich oder alternativ wird in einem Ausführungsbeispiel optional der Schritt 505 des Erkennens des Strahls oder der Strahlen in Verbindung mit einem Bewegungsfilter ausgeführt.

Ansprechend auf den Schritt 505 des Erkennens wird ein Schritt 507 des Bestimmens eine Position eines der Düse abgewandten Endes des Strahls unter Verwendung des Bilds ausgeführt. In dem Schritt 507 wird die Endposition des Strahls optional unter Verwendung des entzerrten Bilds bestimmt.

Durch die Position des der Düse abgewandten Ende des Strahls wird in einem Schritt 509 einer Füllhöhe der Flüssigkeit in dem Gefäß ermittelt.

Um optional einen zeitlichen Verlauf der Füllhöhe zu ermitteln, werden zumindest die Schritte 501, 507, 509 zumindest einmal, optional mehrfach wiederholt. Optional wird der zeitliche Verlauf der Füllhöhe verwendet, um in einem Schritt 511 des Ermittelns eine Gefäßform des Gefäßes zu ermitteln, das unter Verwendung des Strahls befüllt wird. In dem Schritt 511 wird optional eine Menge eines bereits in das Gefäß eingefüllten Volumens des Getränks verwendet, um die Gefäßform zu ermitteln.

Um festzustellen wie voll das Gefäß ist wird zudem ein Schritt des Vergleichens 513 der Füllhöhe mit einem Schwellenwert ausgeführt. Abhängig von dem Ergebnis des Schritts 513 wird die Ausgabe des Strahls in einem Schritt 515 gestoppt.

Dieses Verfahren 500 ist im Vergleich zu alternativen Verfahren einfach und robust. Zusätzlich kann das Verfahren 500 auch mit anderen Verfahren, wie der Ermittlung aus der Fülloberfläche kombiniert werden, um durch "Sensor-Fusion" die Robustheit weiter zu steigern.

## Patentansprüche

1. Verfahren (500) zum Überwachen einer Ausgabe einer Flüssigkeit, die als ein Strahl (225) über eine Düse (110) eines Auslaufs eines Getränkeautomaten (100) in ein Gefäß (112) ausgegeben wird, wobei das Verfahren (500) die folgenden Schritte umfasst:
Erfassen (501) eines Bilds (315) welches den Strahl (225) abbildet;
Bestimmen (507) einer Position eines der Düse (110) abgewandten Ende des Strahls (225) unter Verwendung des Bilds (315); und
Ermitteln (509) einer Füllhöhe der Flüssigkeit in dem Gefäß (112) unter Verwendung der Endposition des Strahls (225).

2. Verfahren (500) gemäß Anspruch 1, wobei im Schritt des Bestimmens (507), eine Strahllänge des Strahls (225) anhand eines Abstands zwischen der Endposition des Strahls (225) und einer Düsenposition bestimmt wird, und im Schritt des Ermittelns (509) die Füllhöhe als Differenz zwischen einer Düsenhöhe und der Strahllänge ermittelt wird.

3. Verfahren (500) gemäß einem der Ansprüche 1 oder 2, mit einem Schritt des Entzerrens (503) des Bilds (315), um ein entzerrtes Bild zu erhalten, wobei im Schritt des Bestimmens (507) die Endposition des Strahls (225) unter Verwendung des entzerrten Bilds bestimmt wird.

4. Verfahren (500) gemäß einem der vorangegangenen Ansprüche, mit einem Schritt des Erkennens (505) des Strahls (225) in dem Bild (315) unter Verwendung eines vorbestimmten Suchkorridors (330, 325) innerhalb des Bilds (315), und/oder unter Verwendung eines Bewegungsfilters.

5. Verfahren (500) gemäß einem der vorangegangenen Ansprüche, wobei im Schritt des Ermittelns (509) die Füllhöhe unter Verwendung der Endposition des Strahls (225), einem Abstand zwischen der Bildaufnahmeeinrichtung (115) und der Düse (110) und der Düsenhöhe ermittelt wird.

6. Verfahren (500) gemäß einem der vorangegangenen Ansprüche, mit einem Schritt des Vergleichens der Füllhöhe mit einem Schwellenwert, und einem Schritt des Stoppens (515) einer Ausgabe des Strahls (225), abhängig von einem Ergebnis des Vergleichens.

7. Verfahren (500) gemäß einem der vorangegangenen Ansprüche, wobei im Schritt des Erfassens (501) das Bild (315) erfasst wird, welches einen zweiten Strahl (225) abbildet, im Schritt des Bestimmens eine Position eines einer zweiten Düse (210) abgewandten Endes des zweiten Strahls (230) unter Verwendung des Bilds (315) bestimmt wird, und im Schritt des Ermittelns (509) eine zweite Füllhöhe der Flüssigkeit in dem Gefäß (112) oder einem zweiten Gefäß unter Verwendung der Endposition des zweiten Strahls (230) ermittelt wird.

8. Verfahren (500) gemäß einem der vorangegangenen Ansprüche, wobei die Schritte des Erfassens (501), Bestimmens (507) und Ermittelns (509) wiederholt ausgeführt werden, um einen zeitlichen Verlauf der Einfüllhöhe zu ermitteln, und mit einem Schritt des Ermittelns einer Gefäßform (511) des Gefäßes (112), unter Verwendung des zeitlichen Verlaufs der Einfüllhöhe, und einem zeitlichen Verlauf eines unter Verwendung des Strahls (225) eingefüllten Volumens.

9. Vorrichtung, die ausgebildet ist, um die Schritte des Verfahrens (500) gemäß einem der vorangegangenen Ansprüche in entsprechenden Einheiten auszuführen und/oder anzusteuern.

10. Getränkeautomat (100), insbesondere ein Kaffeevollautomat, mit folgenden Merkmalen:
einem Auslauf, welcher mindestens eine Düse (110), zum Ausgeben eines Strahls (225) einer Flüssigkeit in ein Gefäß (112) umfasst; und
einer Vorrichtung gemäß Anspruch 6.

11. Getränkeautomat (100) gemäß einem der Ansprüche 7 oder 8, wobei die Vorrichtung eine Bildaufnahmeeinrichtung (115) umfasst, die ausgebildet ist, um das Bild (315) zu erfassen, welches den Strahl (225) abbildet, und ferner eine Auswerteeinrichtung (165) umfasst, die ausgebildet ist, um unter Verwendung des Bilds (315) die Position eines der Düse (110) abgewandten Ende des Strahls (225) zu bestimmen, und unter Verwendung der Position des der Düse (110) abgewandten Endes des Strahls (225) die Füllhöhe der Flüssigkeit in dem Gefäß (112) zu ermitteln.

12. Getränkeautomat (100) gemäß Anspruch 11, wobei die Bildaufnahmeeinrichtung (115) auf einer Höhe mit den Düsen (110; 210) angeordnet ist.
